# EUROPEAN PATENT APPLICATION

(11) **EP 2 434 615 A1**
(43) Date of publication of application: **28.03.2012**
(21) Application number: 10179460.0
(22) Date of filing: 24.09.2010
(51) Int. Cl.: H02K 1/02, H02K 1/14, H02K 1/27

(54) **Electric machine, method for constructing an electric machine, armature and lamination tooth**

(71) Applicant: Siemens Aktiengesellschaft, 80333 München (DE)
(72) Inventor: Thougaard, Hans-joergen, 8600, Silkeborg (DK)

(57) **Abstract**

The invention concerns an electric machine, in particular an electricity generator (1'), most particularly a large scale electricity generator, with an armature (6') and a field (4'), whereby the armature (6') is equipped with a lamination stack with lamination teeth (9') around which windings (13) are assembled. Thereby the lamination teeth (9') are equipped at least in a region (12) of end turns of the windings (13) with an end section (17) comprising a soft magnetic composite. Further the invention concerns a method for constructing such electric machine, and an armature (6') and a lamination tooth (9') of such machine.

## Description

The present invention concerns an electric machine, in particular an electricity generator, most particularly a large scale electricity generator, with an armature and a field, whereby the armature is equipped with a lamination stack with lamination teeth around which windings are assembled. The invention also concerns a method for constructing an electric machine, in particular an electricity generator, most particularly a large scale electricity generator, with an armature and a field. Furthermore, it concerns an armature of an electric machine, in particular an electricity generator, most particularly a large scale electricity generator, which armature is equipped with a lamination stack with lamination teeth around which windings are assembled. Lastly, it concerns a lamination tooth of a lamination stack of an armature of an electric machine, in particular an electricity generator, most particularly a large scale electricity generator, around which lamination tooth windings are assembled in a final stage.

In this introduction, reference is mainly made to generators, particularly to large scale generators. However, it may be noted that analogous effects (in reverse) can be observed in electric motors, which is why the invention generally concerns electric machines, i.e. all such electric machines which fall under the definition given in the previous paragraph.

In generators, armatures and fields are realized by means of a stator and a rotors one of which functions as the armature and the other of which functions as the field. Thereby, the field generally emits a magnetic field which serves to generate an electric current in windings of the armature, which electric current is then transferred to the user.

In large scale generators, the generation of electric power comes to certain limits: higher losses of electric energy are generated in the end turns of the windings and in the outer layers of the lamination tooth of the lamination stack. This is firstly due to copper losses in the end turns and secondly due to eddy currents generated in the outer layers of the lamination tooth, which eddy currents occur from induced current which counteracts with changes of the magnetic field in the lamination material. The losses due to such factors reduce the efficiency of the generator. Their amount depends on the individual stator winding end turn length and the stator construction overall.

One way how to reduce such losses would be to use so-called concentrated windings, which are often used in smaller generators. However in larger machines, the problem of overheating the lamination at the end of a lamination stack or a lamination tooth poses problems as the outer layers of the lamination tooth are subject to huge varying fields perpendicular to the lamination plate.

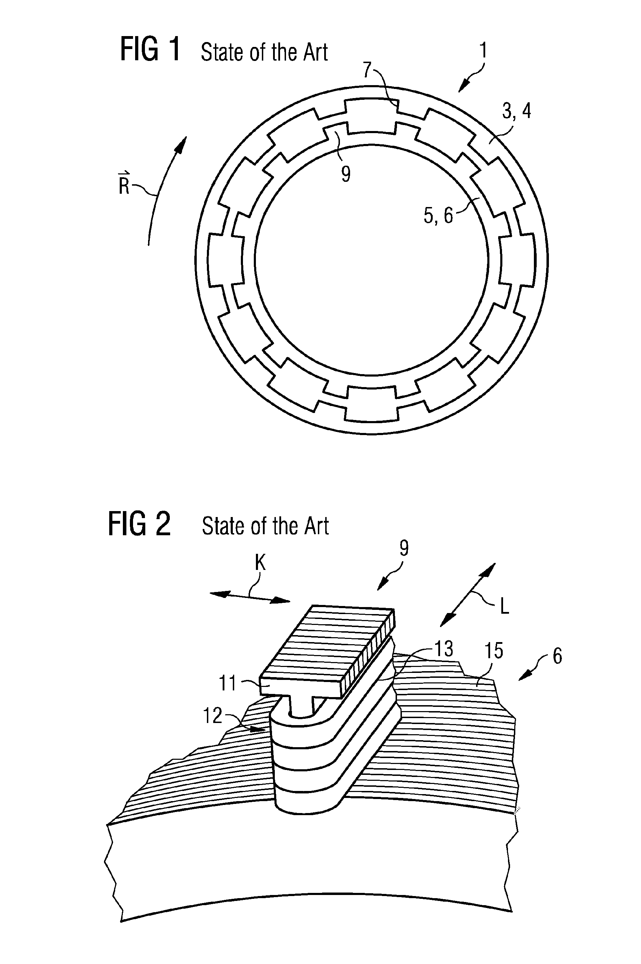

Figure 1 depicts a generator 1 according to the state of the art. A stator ring 5 is realized as an armature 6, in which electric energy is generated, while a rotor ring 3 is realised as a field 4. At the outer circumference of the stator 5 lamination teeth 9 are assembled projecting in the direction of the rotor 3. On the inner surface of the rotor 3 rods 7 of permanent magnets are assembled, which project in the direction of the lamination teeth 9 of the stator 5. When the rotor 3 rotates in a rotation direction R the permanent magnet rods 7 induce current in windings (not shown) aligned around the stator teeth 9 which current can then be used as electric energy.

A detailed view of one stator tooth 9 of figure 1 can be seen in figure 2. The stator tooth 9 is attached to a surface 15 of the stator 6 which stator tooth 9 defines a T-shaped extension of the stator 6 from its main extension. The stator tooth 9 projects perpendicularly from the surface 15 and ends in a foot section 11 with a larger cross extension K than the rest of the stator tooth 9. The stator tooth 9 has an extension in a longitudinal direction L which is larger than its extension in the cross direction K. Windings 13 are wound around the stator tooth 9 below the foot section 11 and change their direction in end turns at a front end region 12 of the lamination tooth 9, which region 12 serves as a turning point for the windings 13.

When current flows through the windings 13 due to the movement of the rotor 3 copper losses and eddy currents will occur in the region 12 of the end turns of the windings 13 so that this particular region 12 heats up more than other regions of the lamination tooth 9 and of the windings 13. Therefore, the end turns of the windings constitute that region in which a kind of bottleneck for the flow of electric current is automatically produced.

Likewise, with reference to an electric motor, similar currents and losses will lead to a reduced output of rotational energy of a rotor of the motor.

It is the object of the invention to provide an improved electric machine and improved relevant parts of such machine, in which the aforementioned losses and or heat production are reduced, preferably substantially reduced.

This object is met by an electric machine according to claim 1, by a method according to claim 12, by an armature according to claim 13 and by a lamination tooth according to claim 15.

Accordingly, the electric machine of the above-mentioned kind is enhanced by equipping the lamination teeth at least in a region of end turns of the windings with an end section comprising a soft magnetic composite.

Besides generators, electric motors can be realized as well in the according way, whereas it must still be noted that generators are in the main focus of the invention due to the effects described above which mainly occur in generators, particularly in large scale generators.

Thus, the invention most particularly applies to large scale electricity generators, which are defined to be any such generators which are used in the context of commercial electricity generation for input into a public power supply network such as generators in wind turbines of commercial scale. Such large scale generators may also be characterized by a minimum nominal power output of 100 kW.

The armature may be realized as a stator or as a rotor and the corresponding field will then be the counterpart, i.e. a rotor if the armature comprises a stator and a stator if the armature comprises a rotor. The region of the end turns of the windings is defined to be such region in which the windings change direction in a turn. In other words, the region of the end turns is that region in which the end terms have a turning point.

In this region the lamination tooth is enhanced by the use of so-called soft magnetic composite's (SMCs). Such composites contain soft magnetic material. Such material can be characterized as a material that becomes magnetized readily upon application of a magnetic field and that preferably returns into a substantially non-magnetic condition when the field is removed. In particular, such material can be made of (compressed) powder of materials such as Fe, Co, Ni, FeSi, Fe₃P or FeNi. In general, such soft magnetic material has high magnetic permeability, low coercive force, and low magnetic hysteresis loss. Preferably, the electric conductivity of the soft magnetic material is either very low by itself or reduced by artificial measures in comparison to the same material in its typical natural state. For instance, electrically conductive metal particles may be used which particles are isolated from each other by a coating. Examples of soft magnetic materials which can be used in the context of the invention are materials by Sintex magnetic systems of Hobro (Denmark), such as Sintex STX H1 SMC, STX B7 SMC and STX B5 SMC.

SMC materials make possible a substantial reduction of both eddy current losses and copper or iron losses. The property of eddy currents in these materials are not dependent on the direction of the fluctuating magnetic field. In addition, the resistivity of SMC materials is of a size many times the resistivity of iron which is usually used overall in lamination teeth. It can thus be assumed that about a quarter of the losses which would usually be expected in large generator machines can be avoided by the use of such SMC materials in the region of the end turns of the windings.

It is possible to equip the complete stator teeth with such SMC materials, however, the inventors have found out that the critical region in which the use of SMC materials caters for the largest production of losses due to eddy currents and iron or copper losses is in fact the region of the end turns of the windings. Therefore, in order to avoid the use of expensive and difficult-to-produce material in an overly extensive way, the equipment of the lamination teeth exclusively in the region of the end turns is highly preferred.

The method according to the invention comprises at least the following steps:
- equipping the armature (6) with a lamination stack with lamination teeth (9'),
- equipping (B) the lamination teeth (9') at least in a region (12) in which end turns of windings (13) are located in an assembled state of the generator with an end section (17) comprising a soft magnetic composite,
- assembling the windings (13) around the lamination teeth (9') .

It must be noted, that the steps of equipping the armature and of equipping the lamination teeth may be performed as well in such manner that the lamination teeth are first equipped and then the armature is equipped with the lamination stack. This is particularly preferred in such cases in which a completely new generator is assembled, while the succession of steps in which the armature is first equipped with the lamination stack and the lamination teeth are later equipped with the SMC material is mainly preferred in such cases in which the machine is re-equipped with lamination teeth with SMC materials. Furthermore, it is also possible to assemble the windings around the lamination teeth before equipping the lamination teeth with the end sections comprising a soft magnetic composite. This is particularly preferred in such cases when a direct connection of the windings to the lamination tooth over a larger interface is wished for.

An armature of the above-mentioned kind is realized according to the invention by an equipment of the lamination teeth at least in a region of end turns of the windings with an end section comprising a soft magnetic composite. Such armature can then be included in a machine according to the invention. Analogously, a lamination tooth of the above-mentioned kind is realized according to the invention by being equipped at least in a region of end turns of the windings with an end section comprising a soft magnetic composite. Such lamination tooth can be assembled together with more lamination teeth, preferably of the same kind, i.e. lamination teeth according to the invention, in an armature and in a machine according to the invention. Both the armature and the lamination tooth according to the invention can thus serve to construct a machine according to the invention and therefore to make possible the advantages indicated above.

Lastly, the invention also includes an armature and field assembly for use in an electric machine, in particular an electricity generator, most particularly a large scale electricity generator, whereby the armature is realized according to the invention.

Particularly advantageous embodiments and features of the invention are given by the dependent claims, as revealed in the following description. Thereby, features revealed in the context of any one category of the invention may also be realized in the context of any of the other categories.

Whereas it is principally possible to equip the lamination tooth with an end section in only one region of end turns of the windings, the effect of the invention can be expected to be much stronger if the lamination teeth are equipped in at least two regions of end turns of the windings with end sections comprising a soft magnetic composite. Such equipment at more than one region of the lamination tooth provides for a strongly increased efficiency, in particular if the lamination teeth are equipped with such end sections at all those regions in which a end turns of the windings exist. Often lamination teeth comprise exactly two end sections with end turns, which means that the lamination teeth have a longitudinal extension at either two ends of which there are end turns. The most preferred embodiment in such context is to equip such lamination teeth with an end section comprising a soft magnetic composite at either these regions.

As has been indicated above the use of concentrated windings, i.e. windings in a field system with salient poles or windings where the coil sides occupy one slot per pole, have a potentially very high efficiency in generating electric power. Up to now, due to overheating in such systems, they could not used in large scale machines. As this is now possible due to the equipment of the lamination teeth with the aforementioned end sections, it is a preferred embodiment of the invention to combine a machine according to the invention with concentrated windings. However, using distributed windings (in contrast to concentrated windings) is not excluded as there may be applications of a machine according to the invention, in particular even larger scale applications, where overheating still plays a crucial role. Therefore, in such cases, the use of distributed windings may indeed be more useful than the use of concentrated windings.

A machine according to the invention preferably comprises lamination teeth which are realized such that they project from a plane into the direction of the field. It may be noted however, that such plane need not necessarily be two-dimensional. Rather, the plane is preferably a curved plane defined by the overall surface of the rotor or stator which would typically describe a circle.

A further enhancement of the invention can be realized by shaping the end section such that it is adjusted to a bending radius of the windings in the region of the end turns. In particular, the end section can be shaped such that its surface that faces in the direction of the windings comes in direct contact with the windings all along the extension of the windings in the region of the end turns. Other methods of adjustment of the shape of the end section are also possible; in general, it can be concluded that the shaping should be carried out in a way that optimizes the magnetic and/or electric properties of the armature. One further advantage of SMC materials - apart from their magnetic and conductive properties - is that they can be easily formed into any three-dimensional shape wished for. With a shaped end region of the lamination tooth it can also be realized that the bending radius of the windings in the end turns can be optimized without lack of active magnetic torque as would be the case if e.g. plastic was used in the end region. Thus, magnetic torque can also be generated in the end turns of the windings so that torque will be generated in substantially the whole coil length of the windings which yet again increases the machine's efficiency.

As has been mentioned before, soft magnetic composites which can be used in the context of the invention have the soft magnetic properties mentioned above. As also mentioned, a particularly advantageous form of a soft magnetic composite is such that little or no electric current flows within the composite material. Therefore, it is preferred that the soft magnetic composite comprises conductive particles electrically isolated from each other by a coating of the particles. The conductive particles comprise, according to particularly preferred embodiment of the invention, metal particles, more specifically iron particles. The coating is most preferably an inorganic coating. Metal particles can be produced in virtually any size, for instance by grinding, and applying the coating to them is thus a process which is relatively easy to control. Inorganic coatings have proven to provide easily very good properties of non-conductivity.

As for the magnetic properties of the soft magnetic composite, it has proven advantageous that the soft magnetic composite has a coercivity of not more than 1000 A/m. This means that a high degree of magnetization can be achieved and thus the end section can be magnetized such that the output of electric energy reaches an optimum.

As for the field of the machine, this is equipped according to a preferred embodiment of the invention with rods of permanent magnets attached to a base structure, the rods comprising a centre part and an end part, the end part being less magnetic than the centre part. Thereby, the end part corresponds in its position and/or in its extension to a position and/or an extension of the end section of the armature. This way it can be achived that the shape, respectively the outline or extension of the field corresponds with that of the armature. In particular, this can be realized advantageously by using such rods in which the centre parts of the rods extend in a longitudinal (*i.e*. *an axial)* direction of the rods substantially to that location which corresponds with an interface of the end section on the corresponding lamination tooth, whereas the end part of the rods extends in the longitudinal direction from that location onwards. Such way it is ensured that the end part of the magnetic rod emits a weaker magnetic field than the centre part, and this weaker magnetic field corresponds with the end section of the lamination teeth of the armature. Therefore, less current is produced in the end region and thus less losses and less overheating is produced there.

As for the materials of such rod, it is preferred that the centre part of the rod comprises a material comprising neodymium, e.g. NdFeB, and/or samarium, e.g. SmCo5 or Sm2Co17. A combination of materials comprising neodymium and materials comprising samarium may also be utilised. In general, the choice of material is defined by the fact that in the centre part a relatively strong magnetic field should be produced and therefore the choice of materials such as neodymium or a samarium has proven advantageous due to their strong magnetic properties. On the other hand, it is preferred that the end parts comprise a ferrite material, e.g. BaFe12O19 or SrFe12O19, which shows lower magnetic properties, in particular in comparison with the materials named above for the centre part.

As has been discussed throughout this description, the solution according to the invention provides for electric machines of a larger scale with less losses than would be expected in the state of the art. Nevertheless, all such systems come to a certain limit, which is only extended by the present invention but not completely overcome. An additional way of how to make possible a very large-scale electric machine using the features of the invention is to add additional cooling means in the generator, preferably positioned such that they have their main impact of cooling in the end region of the lamination teeth. Additional cooling reduces the electrical resistance in the end turns of the windings which thus reduces losses of power output.

Other objects and features of the present invention will become apparent from the following detailed description considered in conjunction with the accompanying drawings. It is to be understood, however, that the drawings are designed solely for the purposes of illustration and not as a definition of the limits of the invention.

In the drawings, like reference numbers refer to like objects throughout. Objects in the diagrams are not necessarily drawn to scale.
Fig. 1 shows a section view of an electrically powered generator according to the state of the art,
Fig. 2 shows a perspective view of one lamination tooth with windings of the generator of figure 1,
Fig. 3 shows a perspective view from below of a part of a lamination tooth according to an embodiment of the present invention,
Fig. 4 shows a section view of the same lamination tooth as in figure 3 along a section line IV-IV,
Fig. 5 shows a section view of the same lamination tooth as in figure 3 along a section line V-V,
Fig. 6 shows a section view of the same lamination tooth as in figure 3 along a section line VI-VI,
Fig. 7 shows a perspective view of a detail of a generator according to an embodiment of the invention,
Fig. 8 shows a block diagram of steps of an embodiment of a method according to the invention.

Figures 1 and 2 have already been discussed above in the context of the state of the art

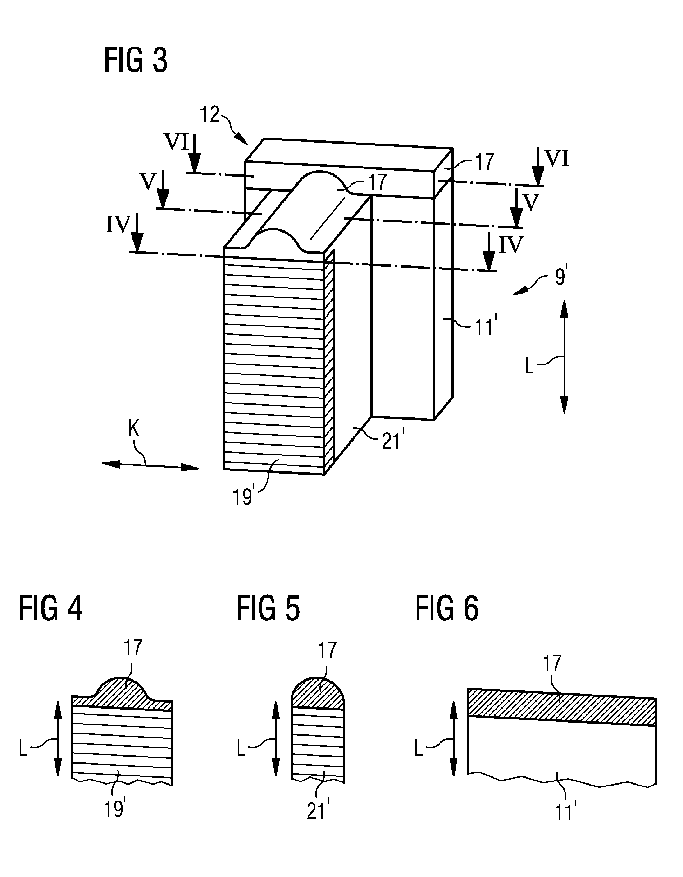

Figure 3 shows part of a lamination tooth 9' according to an embodiment of the invention seen from below. Only part of its longitudinal extension L can be seen in this figure, so that only one end region 12 can be seen in which end turns of windings (not shown) will be assembled in a final assembly stage of an electric machine according to the invention. The lamination tooth 9' has an H shape with a first foot 19' and second foot 11', the cross extension of which differs: the second foot 11' has a larger cross extension than the first foot 19'. In between the two feet 11', 19' a central connection region 21' is positioned which connects the two feet 11', 19' and which serves as that region in which windings will be assembled. In the region 12, in which end turns of the windings will be positioned, an end section 17 is added to the lamination tooth 9', forming an integral part of the tooth 9'. This end section 17 comprises a material comprising a soft magnetic composite as defined above. The use of this soft magnetic composite makes possible that both eddy currents and copper losses are substantially reduced during generation of electric power. Therefore, the soft magnetic composite helps to reduce the generation of heat in this end region 12 and to reduce output losses.

Figure 4 shows a first section view of the tooth 9' along a section line IV-IV in figure 3. The end section 17 in the region of the first foot 19' is shaped in a form resembling a wave while covering the complete foot 19' along the cross extension K.

Similarly, the central connection region 21' is covered by a semi-circular shape of the end section 17, as can be seen in figure 5.

Finally, in in the region of the second foot 11' the end section 17 is shaped like a quadrangular block, as depicted in figure 6.

The different choices of shape of the end section 17 in the regions of the two feet 11', 19' and of the central connection region 21' is due to the fact that windings will generally be led only around the central connection region 21' and many extend down to the first foot 19'. Thus, the end section 17 in these two regions needs to be adjusted to the expected course of the windings, whereas around the second foot 11' no windings will be wound in the region of the end section 17, thus the quadrangular shape.

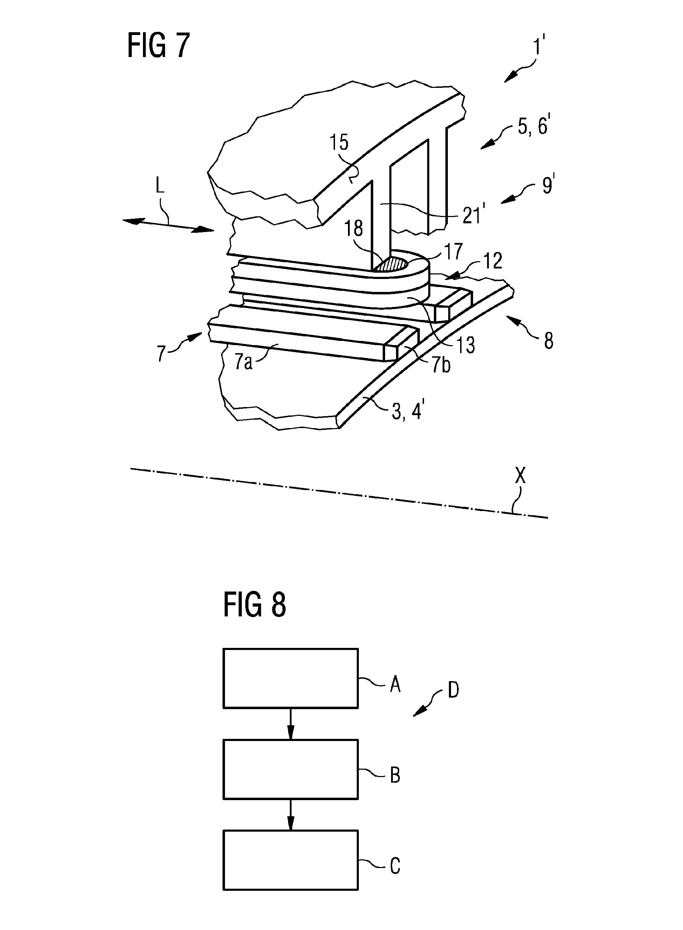

Figure 7 shows a detail of a machine, here a generator 1' according to a particularly preferred embodiment of the invention. An amature 6' realized as a stator 5' and a field 4', realised as a rotor 3' are aligned with each other in such way that the rotor 3' generates a magnetic field which by rotating the rotor 3' along its rotation axis X is moved along lamination teeth 9' (only one of which is depicted) which are realized according to the invention as described in the context of figures 3 to 6. This means in particular that at an interface 18 of each of the lamination teeth 9', in particular of the central connection region 21' there is supplied an end section 17 comprising a material comprising a soft magnetic composite. The lamination teeth 9' project from a plane 15, which is slightly curved along the rotation axis X in the direction of the rotor 3'. Windings 13 are aligned around the rotation teeth 9' and thus describe an end turn around the end section 17.

The rotor 3' comprises magnetic rods 7 aligned on a plane 8 facing towards the stator 6'. Each of the magnetic rods 7 comprises a central part 7a and an end part 7b, which are aligned in the longitudinal direction of the lamination tooth 9'. The end part 7b is located in a region which corresponds to the location of the end section 17 of the lamination tooth 9' so that the magnetic field emitted by the end part 7b is mainly received in the region of the end section 17. In order to reduce the magnetic impact on this end section 17, the end part 7b of the magnetic rods 7 is made of material which is less magnetic than the material in the central centre part 7a of the magnetic rod 7. Therefore, the magnetic field is stronger in the central section of the lamination tooth 9' than in the end section 17 and thus in the end turns of the windings 13. This arrangement makes sure that less eddy currents and less copper losses occur in the end terms of the windings 13.

Figure 8 depicts a block diagram of an embodiment of a method D for constructing an electricity generator according to the invention as shown in Figs. 3 to 7.
In a first step A the armature 6' of the generator 1' is equipped with a lamination stack with lamination teeth 9'.
The second step B comprises equipping the lamination teeth 9' at least in the region in which the end turns of the windings 13 will be located later with the end section 17 comprising a soft magnetic composite. Lastly, in a third step C, the windings 13 are assembled around the lamination teeth 9'. As has been mentioned before, steps A and B may be interchanged and even step C may be put before step B on some occasions.

Although the present invention has been disclosed in the form of preferred embodiments and variations thereof, it will be understood that numerous additional modifications and variations could be made thereto without departing from the scope of the invention. While a generator and its components was used as a basis for the description, the electric machine according to the invention may also be realized to good effect as an electric motor. The shape of the end section can also be realized in a different way than shown and described here.

For the sake of clarity, it is to be understood that the use of "a" or "an" throughout this application does not exclude a plurality, and "comprising" does not exclude other steps or elements.

## Claims

1. Electric machine, in particular electricity generator (1'), most particularly large scale electricity generator, with an armature (6') and a field (4'), whereby the armature (6') is equipped with a lamination stack with lamination teeth (9') around which windings (13) are assembled, whereby the lamination teeth (9') are equipped at least in a region (12) of end turns of the windings (13) with an end section (17) comprising a soft magnetic composite.

2. Machine according to claim 1, whereby the lamination teeth (9') are equipped in at least two regions (12) of end turns of the windings (13) with end sections (17) comprising a soft magnetic composite.

3. Machine according to claim 1 or 2, whereby the windings (13) comprise concentrated windings.

4. Machine according to any one of the preceding claims, whereby the lamination teeth (9') are realized such that they project from a plane (15) into the direction of the field (4') .

5. Machine according to any one of the preceding claims, whereby the end section (17) is shaped such that it is adjusted to a bending radius of the windings (13) in the region (12) of end turns.

6. Machine according to any one of the preceding claims, whereby the soft magnetic composite comprises conductive particles electrically isolated from each other by a coating of the particles.

7. Machine according to any one of the preceding claims, whereby the soft magnetic composite has a coercivity of not more than 1000 A/m.

8. Machine according to any one of the preceding claims, whereby the field (4') is equipped with rods (7) of permanent magnets attached to a base structure (8), the rods (7) comprising a centre part (7a) and an end part (7b), the end part (7b) being less magnetic than the centre part (7a), whereby the end part (7a) corresponds in its position and/or in its extension to a position and/or an extension of the end section (17) of the armature (6').

9. Machine according to claim 8, whereby the centre parts (7a) of the rods (7) extend in a longitudinal direction (L) of the rods (7) substantially to that location which corresponds with an interface (18) of the end section (17) on the corresponding lamination tooth (9'), whereas the end part (7b) of the rods (7) extends in the longitudinal direction (L) from that location onwards.

10. Machine according to claim 8 or 9, whereby the centre part (7a) of the rod (7) comprises a material comprising neodymium and/or samarium.

11. Machine according to any one of claims 8 to 10 in which the end parts (7b) comprise a ferrite material.

12. Method (D) for constructing an electric machine, in particular an electricity generator (1'), most particularly a large scale electricity generator, with an armature (6') and a field (4'), comprising the steps of:
- equipping (A) the armature (6') with a lamination stack with lamination teeth (9'),
- equipping (B) the lamination teeth (9') at least in a region (12) in which end turns of windings (13) are located in an assembled state of the generator with an end section (17) comprising a soft magnetic composite
- assembling the windings (13) around the lamination teeth (9') .

13. Armature (6') of an electric machine, in particular an electricity generator (1'), most particularly a large scale electricity generator, which armature (6') is equipped with a lamination stack with lamination teeth (9') around which windings (13) are assembled, whereby the lamination teeth (9') are equipped at least in a region (12) of end turns of the windings (13) with an end section (17) comprising a soft magnetic composite.

14. Armature (6') and field (4') assembly for use in an electric machine, in particular an electricity generator (1'), most particularly a large scale electricity generator, whereby the armature (6') is realized according to claim 13.

15. Lamination tooth (9') of a lamination stack of an armature (6') of an electric machine, in particular an electricity generator (1'), most particularly a large scale electricity generator, around which lamination tooth (9') windings (13) are assembled in a final stage, the lamination tooth (9') being equipped at least in a region (12) of end turns of the windings with an end section (17) comprising a soft magnetic composite.
